Europäisches Patentamt

European Patent Office

Office européen des brevets

(19)

(11) Veröffentlichungsnummer: **0 012 928 B1**

## EUROPÄISCHE PATENTSCHRIFT

(12)

(45) Veröffentlichungstag der Patentschrift: 17.11.82

(51) Int. Cl.³: **C 08 B 9/00**

(21) Anmeldenummer: **79105097.4**

(22) Anmeldetag: **12.12.79**

(54) **Verfahren zur Herstellung von Viskose.**

(30) Priorität: **20.12.78 DE 2855061**

(43) Veröffentlichungstag der Anmeldung: **09.07.80 Patentblatt 80/14**

(45) Bekanntmachung des Hinweises auf die Patenterteilung: **17.11.82 Patentblatt 82/46**

(84) Benannte Vertragsstaaten: **AT BE DE FR GB IT SE**

(56) Entgegenhaltungen:
**CH-A-99 494**
**US-A-2 735 846**
**US-A-3 600 379**
**US-A-4 136 255**

(73) Patentinhaber: **HOECHST AKTIENGESELLSCHAFT, Postfach 80 03 20, D-6230 Frankfurt/Main 80 (DE)**

(72) Erfinder: **Fauth, Heinrich, Dr. Dipl.-Chem., Hermann-Hesse-Strasse 25, D-6500 Mainz (DE)**
Erfinder: **Koch, Werner, Akazienring 40, D-6201 Massenheim-Gartenstadt (DE)**

## Verfahren zur Herstellung von Viskose

Die Erfindung betrifft ein Verfahren zur Herstellung von Viskose, bei dem man Cellulose auf chemischem Wege in Alkali-Cellulose umwandelt, diese mit Schwefelkohlenstoff sulfidiert und das gebildete Cellulose-Xanthogenat in wäßriger Lauge löst.

Es ist bekannt, Viskose dadurch herzustellen, daß man beispielsweise aus Nadelholz hergestellten Sulfit-Zellstoff in Gestalt von Platten oder als Maische mit wäßriger Natronlauge behandelt, überschüssige Lauge von der gebildeten Alkali-Cellulose durch mechanisches Abpressen entfernt, die Alkali-Cellulose mechanisch zerfasert und sie dann einer Reifezeit unterwirft, im Verlauf derer der Durchschnittspolymerisationsgrad der Cellulose auf einen angestrebten Wert — beispielsweise einen Durchschnittspolymerisationsgrad von 300 — abgebaut wird. Die molekular-strukturell abgebaute Alkali-Cellulose wird dann sulfidiert, indem man Schwefelkohlenstoff auf sie einwirken läßt. Das bei der chemischen Sulfidierungsreaktion gebildete Cellulose-Xanthogenat wird dann in Natronlauge gelöst, wobei man die Lösung gegebenenfalls einer weiteren Ruhezeit zur Nachreifung unterwirft, während der die Lösung filtriert und in bekannter Weise entgast werden kann.

Die beim Sulfidieren der Alkali-Cellulose mit Schwefelkohlenstoff zu Cellulose-Xanthogenat erforderliche Schwefelkohlenstoffmenge richtet sich nach dem qualitativen und quantitativen Aufbau der Ausgangscellulose in Abhängigkeit von deren Herkunft, der Molekulargewichtsverteilung der zu sulfidierenden Alkali-Cellulose und den angestrebten Eigenschaften des Verfahrensprodukts Viskose im Hinblick auf ihre beabsichtige Weiterverarbeitung. Sofern die Viskose beispielsweise zur Folienherstellung herangezogen werden soll, ist eine geringere Einsatzmenge an Schwefelkohlenstoff zur Sulfidierung von Alkali-Cellulose erforderlich als bei der Herstellung von Viskose, die für die Zellwoll-Herstellung gedacht ist. Für hochfeste Fasern kann die zur Sulfidierung erforderliche Schwefelkohlenstoffmenge um das doppelte höher sein als bei der Herstellung von Viskose, die zur Herstellung von Zellwolle verwendet werden soll.

Die Cellulose-Xanthogenat gelöst enthaltende wäßrige NaOh-Lösung weist im allgemeinen einen Anteil im Bereich von 4 bis 10 Gewichts-% Cellulose, sowie einen Anteil im Bereich von 4 bis 7 Gewichts-% Natriumhydroxid, bezogen auf das Gesamtgewicht der Lösung auf.

Es ist dem Fachmann bekannt, daß beim Sulfidieren von Natron-Cellulose mit Hilfe von Schwefelkohlenstoff bis zu etwa 65 bis 70% der dazu eingesetzten Schwefelkohlenstoffmenge im gewünschten Reaktionssinn zur Bildung von Cellulose-Xanthogenat verbraucht wird, während etwa 25 bis 30% der insgesamt eingesetzten Schwefelkohlenstoffmenge zur Bildung von unerwünschten Nebenprodukten verbraucht wird und etwa 3 bis 5 Gewichts-% der insgesamt zur Sulfidierung eingesetzten Schwefelkohlenstoffmenge chemisch unumgesetzt bleibt.

Bei der Sulfidierungsreaktion von Alkali-Cellulose mit Schwefelkohlenstoff ist die Bildung von Nebenprodukten mit Schwefelkohlenstoffverbrauch nicht nur wegen des unökonomischen Schwefelkohlenstoff- sowie Laugenverbrauchs unerwünscht, sondern auch deshalb, weil diese Nebenprodukte bei der weiteren Verarbeitung der Viskoselösung, unter chemischer Zersetzung, zur Bildung schädlicher Gase führen, die den Fabrikationsablauf erheblich stören. Insbesondere entsteht der gesamte, beim Spinnprozeß von Viskoselösung freiwerdende, störende Schwefelwasserstoff durch chemische Zersetzung schwefelhaltiger Nebenprodukte in der Viskoselösung.

Aus diesem Grund ist bereits versucht worden, das Viskose-Herstellungsverfahren in der Art zu führen, daß die zur Sulfidierung einer bestimmten Menge Alkali-Cellulose insgesamt eingesetzte Schwefelkohlenstoffmenge bei der Sulfidierungsreaktion optimal zur Bildung von Cellulose-Xanthogenat ausgenutzt und die Bildung unerwünschter Nebenprodukte weitgehend zurückgedrängt wird.

So ist ein Viskose-Herstellungsverfahren bekannt (US-A-3 600 379), das diesem Ziele dient, bei dem die in der ersten Verfahrensstufe üblicherweise hergestellte Alkali-Cellulose nach mechanischem Abpressen von überschüssiger Lauge, Zerfaserung der Alkali-Cellulose und Vorreifung wenigstens einer weiteren Alkalisierung unterworfen wird bei der die NaOH-Konzentration der auf die Alkali-Cellulose zur Einwirkung gelangenden, wäßrigen Lauge geringer als 15 Gewichts-%, bezogen auf ihr Gesamtgewicht, ist.

Durch die zweite Alkalisierung der abgepreßten und danach vorgereiften Alkali-Cellulose ist der zu ihrer Sulfidierung erforderliche Schwefelkohlenstoffbedarf zur Herstellung einer Viskoselösung bestimmter Eigenschaften deutlich geringer als bei der Herstellung entsprechender Viskoselösungen, bei denen das Verfahren nur einen Alkalisierungsschritt mit Natronlauge relativ hoher Konzentration umfaßt.

Dieses bekannte Viskose-Herstellungsverfahren hat jedoch bei optimaler Ausnutzung der zur Sulfidierung von Alkali-Cellulose eingesetzten Schwefelkohlenstoffmenge den erheblichen Nachteil, daß die Aufeinanderfolge der hierzu erforderlichen Verfahrensschritte:

a) Alkalisierung der Cellulose,
b) mechanisches Abpressen der Alkali-Cellulose von überschüssiger Lauge,
c) Zerfaserung der Alkali-Cellulose,
d) Vorreife der Alkali-Cellulose,
e) Alkalisierung des vorgereiften Produktes gemäß d),

f) mechanisches Abpressen der Alkali-Cellulose von überschüssiger Lauge,
g) Zerfaserung der Alkali-Cellulose,
h) Sulfidieren der Alkali-Cellulose,
i) Lösen des Cellulose-Xanthogenats und
k) Nachreife der Viskose,

sehr aufwendig und unwirtschaftlich ist.

Der vorliegenden Erfindung liegt deshalb die Aufgabe zugrunde, ein Verfahren zur Herstellung von Viskose vorzuschlagen, das weniger Aufwand erfordert und bei einfacherer Durchführbarkeit zu Erzeugnissen mit den für ihre Weiterverarbeitung in spinnviskosem Zustand erforderlichen Eigenschaften führt.

Die der Erfindung zugrunde liegende Aufgabe wird gelöst durch ein Viskose-Herstellungsverfahren gemäß Anspruch 1. Die Unteransprüche geben weitere Ausgestaltungen des Verfahrens an.

Nachfolgend wird die Durchführung des Verfahrens beispielhaft beschrieben:

Zunächst läßt man in an sich bekannter Weise Natronlauge, beispielsweise mit einer NaOH-Konzentration im Bereich von 16 bis 20 Gewichts-%, bezogen auf ihr Gesamtgewicht, auf Zellstoff — beispielsweise in Plattenform — während einer Zeit im Bereich von 20 bis 50 Min. bei einer Temperatur von 25°C einwirken (erste Alkalisierungsstufe).

Das Reaktionsgut ist dadurch charakterisiert, daß es eine Menge im Bereich von 4 bis 7 Gewichts-% Cellulose, bezogen auf das Gesamtgewicht, aufweist.

Die Alkali-Cellulose wird dann, ohne sie der Einwirkung von Preßkraft zu unterwerfen, von überschüssiger Natronlauge wenigstens teilweise befreit, beispielsweise, indem man entweder die gesamte Menge überschüssiger Natronlauge oder nur einen Teil derselben von der Alkali-Cellulose ablaufen läßt, danach auf diese erneut Alkalilauge einer Konzentration im Bereich von 11 bis 15 Gewichts-% während eines Zeitraumes im Bereich von 20 bis 50 Min., insbesondere bevorzugt 25 bis 35 Min., zur Einwirkung bringt (zweiter Alkalisierungsschritt). Die Natronlaugeeinwirkung auf die Alkali-Cellulose während des zweiten Alkalisierungsschrittes erfolgt bei einer Temperatur, die während der Gesamteinwirkung höchstens 18°C beträgt; insbesondere weist dabei die Natronlauge zu Beginn der Einwirkungszeit eine Temperatur von höchstens 15°C, ganz besonders bevorzugt eine solche im Bereich von 5 bis 10°C, auf. Gegebenenfalls wird während des zweiten Alkalisierungsschrittes das Reaktionsgut zur Verhinderung eines Temperaturanstiegs auf über 18°C entsprechend temperiert. Zu diesem Zweck kann man das Gemisch entsprechend kühlen oder man wählt die Anfangstemperatur der Lauge so niedrig, daß diese während der gesamten Einwirkungszeit 18°C auch ohne Kühlung nicht überschreitet.

Bei der zweiten Alkalisierung enthält das Reaktionsgut im Bereich von 4 bis 7, bevorzugt 4,5 bis 5,5 Gewichts-% Cellulose, bezogen auf das Gesamtgewicht.

Sodann wird von dem Gemisch überschüssige Lauge abgepreßt; die erhaltene Alkali-Cellulose weist einen Celluloseanteil im Bereich von 30 bis 34 Gewichts-%, bevorzugt 32 Gewichts-%, sowie einen NaOH-Anteil im Bereich von 11 bis 15 Gewichts-%, jeweils bezogen auf das Gesamtgewicht der Alkali-Cellulose, auf.

Die Abpressung erfolgt mit einem Druck von beispielsweise 140 bar, der Preßfaktor beträgt beispielsweise 2,9 und die Preßdauer beispielsweise 15 bis 30 Min.

Infolge der Verwendung von Alkalilauge der angegebenen Kriterien bei der zweiten Alkalisierung ist es nicht erforderlich, auch nach der ersten Alkalisierung überschüssige Alkalilauge durch Abpressen zu entfernen.

Die abgepreßte Alkali-Cellulose wird dann in bekannter Weise zerkleinert, beispielsweise mit Hilfe einer Mühle oder eines Zerfaserers.

Die zerfaserte Alkali-Cellulose wird dann einer Reifezeit unterworfen, beispielsweise einer solchen im Bereich von 20 bis 25, bevorzugt 23 bis 24 Std.

Die Bedeutung des Begriffes »Reife« ist in dem Buch »Chemiefasern nach dem Viskoseverfahren«, 3. Auflage, 1. Band, 1967, Springer-Verlag Berlin-Heidelberg-New York, auf Seite 38 erläutert.

Die während der Reifezeit eintretende Reifung der Alkali-Cellulose führt unter Depolymerisation der Cellulosemoleküle zu einem Durchschnittspolymerisationsgrad beispielsweise im Bereich von 500 bis 600.

Auf die gereifte Alkali-Cellulose läßt man dann zum Zweck ihrer Sulfidierung Schwefelkohlenstoff einwirken. Die Schwefelkohlenstoffeinwirkung erfolgt beispielsweise bei einer Temperatur im Bereich von 30 bis 35°C während einer Zeitdauer im Bereich von 60 bis 120, insbesondere von 80 bis 95 Min.

Bezogen auf das Gesamtgewicht der zu sulfidierenden Cellulose wird eine Schwefelkohlenstoffmenge im Bereich von 22 bis 28, bevorzugt 24 bis 26 Gewichts-% eingesetzt.

Das derart hergestellte Produkt wird in wäßriger Natronlauge, beispielsweise einer Konzentration im Bereich von 3,5 bis 4,0 Gewichts-% NaOH, bezogen auf ihr Gesamtgewicht, zu einer Cellulosekonzentration im Bereich von 7,0 bis 7,2 Gewichts-%, bezogen auf das Gesamtgewicht der Lösung, gelöst.

Die wie vorgenannt angegeben hergestellte Lösung unterwirft man einer Reifezeit von einer Dauer im Bereich von 8 bis 10 Std. bei einer Temperatur im Bereich von 30 bis 34°C, während der, durch Nachreife der Viskose, die für die bestimmungsgemäße Weiterverarbeitbarkeit der Viskoselösung nach dem Spinnverfahren zu Folien, Schläuchen oder Fasern erforderliche Spinnviskosität erzielt wird.

Während der Reifezeit kann die Lösung in bekannter Weise filtriert und entgast werden.

Die hergestellte Lösung wird als Viskose bezeichnet.

Nachfolgend sollen zwei besondere Varianten des erfindungsgemäßen Verfahrens erläutert werden.

### 1. Doppelalkalisierung ohne Zwischenabpressung

Der zu verarbeitende Zellstoff in Form von Linters wird zunächst in bekannter Weise mit Natronlauge durch sogenannte Tauchalkalisierung in Alkali-Cellulose übergeführt.

Die Einwirkungszeit der Alkalilauge bei der Tauchalkalisierung kann dabei auf die Hälfte der sonst üblichen Zeitdauer verkürzt werden, beispielsweise auf eine Zeit im Bereich von 20 bis 40 Min.

Die Natronlauge weist eine Konzentration im Bereich von 16 bis 20 Gewichts-% NaOH, bezogen auf das Gesamtgewicht der Lösung, auf. Das Reaktionsgut, umfassend Natronlauge und Cellulose, weist einen Anteil von 4 bis 7 Gewichts-% Cellulose, bezogen auf das Gesamtgewicht, auf.

Nach erfolgter Laugeeinwirkung läßt man überschüssige Lauge von der Alkali-Cellulose ab- und in einen besonderen Behälter einlaufen. Die verwendete Lauge kann wieder aufkonzentriert werden und ist dann erneut einsetzbar.

In den Alkali-Cellulose enthaltenden Behälter wird nun Natronlauge einer Konzentration im Bereich von 13 bis 15 Gewichts-% in einer Menge zugegeben, daß das Gemisch 4 bis 7 Gewichts-% Cellulose, bezogen auf das Gesamtgewicht, aufweist. Es ist dabei erfindungsessentiell, daß die Temperatur der Lauge während der Einwirkung höchstens 15° C, bevorzugt 5 bis 10° C, beträgt und während der gesamten Einwirkungszeit 18° C nicht überschreitet.

Die Laugeneinwirkungszeit in der zweiten Alkalisierungsstufe liegt im Bereich von 20 bis 40 Min. Ein Temperaturanstieg der Lauge auf eine Temperatur oberhalb 18° C während der Einwirkungszeit tritt auch ohne weitere Kühlung dann nicht ein, wenn man von einer Lauge ausgeht, die eine Temperatur von beispielsweise 5 bis 10° C aufweist.

Einen homogenen Konzentrationsausgleich zwischen und in den alkalisierten Zellstoffblättern erhält man durch Umpumpen der Lauge während der Einwirkungszeit (Tauchzeit).

Der zweifach alkalisierte Zellstoff, in Form von Linters, wird sodann in bekannter Weise von überschüssiger Lauge abgepreßt, beispielsweise mit Hilfe einer bekannten Tauchpresse. Die Preßdauer beträgt beispielsweise 15 Min., der Preßdruck 85 bar; der Preßfaktor: 2,9.

Die nach der zweiten Alkalisierung vom alkalisierten Produkt ablaufende Lauge hat eine Konzentration im Bereich von 13,5 bis 15,8 Gewichts-% NaOH, bezogen auf das Laugegewicht, wobei diese Konzentration höher liegt als die Konzentration der für die zweite Alkalisierung eingesetzten Lauge.

Die durch zweifache Alkalisierung von Linters hergestellte Alkali-Cellulose weist einen Celluloseanteil im Bereich von 30 bis 34 Gewichts-% Cellulose sowie einen Anteil von 13 bis 15 Gewichts-% Natriumhydroxid, jeweils bezogen auf das Gesamtgewicht der Alkali-Cellulose, auf.

Der nach dem vorliegenden Verfahren erreichte Zustand der Alkali-Cellulose, deren Alkaligehalt niedriger liegt als bei bekannten, konventionellen Viskose-Herstellungsverfahren mit einmaliger Alkalisierung, macht es möglich, bei der in der weiteren Verfahrensstufe folgenden Sulfidierung die zu Einsatz gelangende Schwefelkohlenstoffmenge um 25 bis 30 Gewichts-%, bezogen auf das Gewicht der nach einmaliger Alkalisierung üblichen Schwefelkohlenstoffmenge, und/oder den Alkaligehalt des Verfahrensproduktes Viskose um 10 bis 20 Gewichts-%, bezogen auf den nach einmaliger Alkalisierung üblichen Alkaligehalt, zu reduzieren, ohne die Filtrationseigenschaften der herstellbaren Viskose nachteilig zu beeinflussen. Für die Filtrationseigenschaften der Viskose ist der Filterwert $k_f$ charakteristisch. Dieser wird wie folgt bestimmt:

Die Bestimmung des Filterwertes $k_f$ erfolgt mit einer Filtrationsvorrichtung, wie sie im Zellcheming-Merkblatt III/4/66 beschrieben ist. Als Filterbelag dient eine Kombination von Nessel-Kalmuck-Nessel. Die Filterfläche beträgt 28 cm², der Filtrationsvordruck 2 bar. Nach Beschickung des Filterrohres mit ca. 1 Liter Prüfviskose und Anlegen des Vordrucks mißt man mittels Stoppuhr die Zeit t, innerhalb welcher 120 ml Viskose in einen 500-ml-Meßzylinder einfließen. Nach einer Gesamtfiltrationszeit von 4 · t wird die Filtratmenge m, die sich inzwischen im Meßzylinder angesammelt hat, an der Skala abgelesen.

Der Filterwert $k_f$ berechnet sich sodann wie folgt:

$$k_f = \frac{m}{4,8} \%$$

Geringe $k_f$-Werte, beispielsweise $k_f = 50\%$, bedeuten schlechte Filtrierbarkeit, hohe $k_f$-Werte, beispielsweise $k_f = 75\%$, gute Filtrierbarkeit der Viskoselösung.

Die Verfahrensvariante der Doppelalkalisierung ohne Zwischenabpressung läßt sich besonders bei der Tauchpressen-Alkalisierung vorteilhaft durchführen.

### 2. Zweite Verfahrensvariante: »Verdünnungsalkalisierung«

Diese Verfahrensvariante unterscheidet sich von der erstgenannten dadurch, daß nach der ersten Alkalisierung die Lauge unter Vermeidung von Preßdruckeinwirkung nur teilweise oder gar nicht abgelassen und die für die zweite Alkalisierung gewünschte Laugekonzentration durch Zugabe von Wasser eingestellt wird.

Der zu entfernende Laugeanteil und die zuzusetzende Wassermenge errechnen sich dabei aus der Laugekonzentration, die für die zweite Alkalisierungsstufe gewünscht wird.

Das zugegebene Wasser weist hierbei eine Temperatur von höchstens 15°C, vorzugsweise von 5 bis 10°C, auf, so daß nach Mischung der zugegebenen Wassermenge mit dem Restanteil Lauge im Reaktionsbehälter eine verdünnte Natronlauge einer Temperatur von höchstens 15°C, vorzugsweise von 5 bis 10°C, entsteht. Besonders vorteilhaft verwendet man zur Verdünnung des Restanteils Lauge im Reaktionsbehälter Wasser einer Temperatur von ca. 0°C (Eiswasser).

Die zweite Alkalisierung verläuft während ihrer Gesamtzeit bei einer Temperatur von höchstens 18°C.

Die in der zweiten Alkalisierungsstufe verwendete verdünnte Natronlauge hat eine Konzentration im Bereich von 13 bis 15 Gewichts-% NaOH, bezogen auf ihr Gesamtgewicht. Nach der Laugezugabe hat die Mischung einen mengenmäßigen Anteil im Bereich von 4 bis 7 Gewichts-% Cellulose, bezogen auf das Gesamtgewicht.

Diese Verfahrensvariante kann jedoch auch in der Weise abgewandelt werden, daß man die im Reaktionsbehälter befindliche Alkalilauge der ersten Alkalisierungsstufe ohne Teilablassung von Lauge nur durch Zugabe einer entsprechend der gewünschten Endkonzentration der Lauge der zweiten Alkalisierungsstufe bemessenen Wassermenge verdünnt. Bei dieser Verfahrensabwandlung wird jedoch das Gesamtvolumen im Kreislauf stark vergrößert, was mit Nachteilen verbunden ist.

In vorteilhafter Ausgestaltung der genannten Verfahrensabwandlung wird bereits in der ersten Alkalisierungsstufe Natronlauge einer Temperatur von höchstens 18°C eingesetzt, wodurch die essentielle Temperatur der Lauge in der zweiten Alkalisierungsstufe leichter einstellbar ist.

Nach erfolgter zweiter Alkalisierung wird die Mischung wie üblich weiterbehandelt: Überschüssige Lauge wird von der Alkali-Cellulose abgepreßt, diese wird dann zerfasert, die zerfaserte Alkali-Cellulose wird einer Ruhezeit unterworfen, die ihre Reifung bewirkt, anschließend erfolgt die Sulfidierung der Alkali-Cellulose mit Schwefelkohlenstoff unter den Bedingungen gemäß der ersten Verfahrensvariante.

Die zweite Verfahrensvariante läßt sich insbesondere dann anwenden, wenn man bei der Viskose-Herstellung von Zellstoffmaische ausgeht. In diesem Fall ergibt sich beispielsweise folgende kontinuierliche Verfahrensweise:

Die erste Alkalisierung der Cellulose erfolgt mit Lauge üblicher Konzentration bei einer Stoffdichte, die so eingestellt ist, daß sich nach dem Verdünnen der Lauge auf die gewünschte Konzentration für die zweite Alkalisierung eine Stoffdichte von 5 Gewichts-% ergibt. Betragen beispielsweise diese Laugekonzentrationen 19 Gewichts-% (erste Alkalisierung) bzw. 13 Ge-

wichts-% (zweite Alkalisierung), so muß die Stoffdichte bei der ersten Alkalisierung auf 7,5 Gewichts-% eingestellt werden. Die Verdünnung der Maische mit kaltem Wasser erfolgt auf dem Wege zwischen Anmaischer und Zwischenbehälter, der als Puffer dient, zweckmäßig in einem geeigneten, bekannten Homogenisator durch kontinuierliches Zudosieren der vorberechneten Wassermenge. Die zweite Alkalisierung verläuft im Zwischenbehälter unter mäßiger Bewegung und einer gesamten Alkalisierungsdauer im Bereich von 20 bis 40, vorteilhaft 30 Min. bei einer Temperatur von höchstens 18°C, vorteilhaft bei einer Temperatur im Bereich von 5 bis 10°C.

Auch in diesem Fall ist es besonders zweckmäßig, daß bereits in der ersten Alkalisierungsstufe Lauge verwendet wird, deren Temperatur nicht höher als 18°C ist.

Bei dem erfindungsgemäßen Verfahren können sämtliche Zellstoffarten sowie Linters verwendet werden. Die NaOH-Konzentration der in der zweiten Alkalisierungsstufe verwendeten Natronlauge hängt von der Art des verwendeten Zellstoffes ab und muß entsprechend gewählt werden. Bei Verwendung von Holzzellstoff wird zweckmäßig eine Natronlauge einer Konzentration von 11 bis 13 Gewichts-% NaOH, bezogen auf das Gesamtgewicht der Lauge, verwendet, während beim Einsatz von Linters die zur Verwendung gelangende Natronlauge eine Konzentration im Bereich von 13 bis 15 Gewichts-% NaOH, bezogen auf ihr Gesamtgewicht, aufweist.

Das erfindungsgemäße Verfahren ermöglicht die Reduzierung der zur Sulfidierung der Alkali-Cellulose notwendigen Schwefelkohlenstoffmenge, was zur Folge hat, daß beispielsweise die beim Spinnen von Fasern oder Folien aus Viskoselösung freiwerdende Schwefelkohlenstoffmenge in der Abluft um ca. 19% und die Schwefelwasserstoffmenge um ca. 50% vermindert ist. Diese Abgasverminderung ist aus der Sicht des Umweltschutzes von ganz besonderer Bedeutung.

Ein weiterer Vorteil der geringen Gasentwicklung beim Spinnen der nach dem erfindungsgemäßen Verfahren hergestellten Viskoselösung besteht in der Verlängerung der sogenannten Schneidezeit bei der Herstellung von Schläuchen durch Spinnen von Viskose in entsprechende Fällbäder. Zwecks Entfernung von Gas und verbrauchter Säure aus dem Schlauchinnern muß der Schlauch in bestimmten Zeitabständen aufgeschlitzt werden. Infolge der geringeren Menge freiwerdender Gase bei der Spinnverarbeitung von nach dem erfindungsgemäßen Verfahren hergestellter Viskose ist es möglich, die zeitliche Aufeinanderfolge von notwendig werdenden Einschnitten in den Schlauch um den Faktor 2 bis 3 zu verlängern, was sich vorteilhaft auf die Abfallquote des hergestellten Produktes und dessen weitere Verarbeitung auswirkt.

Das erfindungsgemäße Verfahren wird durch die nachfolgenden Beispiele erläutert:

zuzusetzende Wassermenge errechnen sich dabei aus der Laugekonzentration, die für die zweite Alkalisierungsstufe gewünscht wird.

Das zugegebene Wasser weist hierbei eine Temperatur von höchstens 15°C, vorzugsweise von 5 bis 10°C, auf, so daß nach Mischung der zugegebenen Wassermenge mit dem Restanteil Lauge im Reaktionsbehälter eine verdünnte Natronlauge einer Temperatur von höchstens 15°C, vorzugsweise von 5 bis 10°C, entsteht. Besonders vorteilhaft verwendet man zur Verdünnung des Restanteils Lauge im Reaktionsbehälter Wasser einer Temperatur von ca. 0°C (Eiswasser).

Die zweite Alkalisierung verläuft während ihrer Gesamtzeit bei einer Temperatur von höchstens 18°C.

Die in der zweiten Alkalisierungsstufe verwendete verdünnte Natronlauge hat eine Konzentration im Bereich von 13 bis 15 Gewichts-% NaOH, bezogen auf ihr Gesamtgewicht. Nach der Laugezugabe hat die Mischung einen mengenmäßigen Anteil im Bereich von 4 bis 7 Gewichts-% Cellulose, bezogen auf das Gesamtgewicht.

Diese Verfahrensvariante kann jedoch auch in der Weise abgewandelt werden, daß man die im Reaktionsbehälter befindliche Alkalilauge der ersten Alkalisierungsstufe ohne Teilablassung von Lauge nur durch Zugabe einer entsprechend der gewünschten Endkonzentration der Lauge der zweiten Alkalisierungsstufe bemessenen Wassermenge verdünnt. Bei dieser Verfahrensabwandlung wird jedoch das Gesamtvolumen im Kreislauf stark vergrößert, was mit Nachteilen verbunden ist.

In vorteilhafter Ausgestaltung der genannten Verfahrensabwandlung wird bereits in der ersten Alkalisierungsstufe Natronlauge einer Temperatur von höchstens 18°C eingesetzt, wodurch die essentielle Temperatur der Lauge in der zweiten Alkalisierungsstufe leichter einstellbar ist.

Nach erfolgter zweiter Alkalisierung wird die Mischung wie üblich weiterbehandelt: Überschüssige Lauge wird von der Alkali-Cellulose abgepreßt, diese wird dann zerfasert, die zerfaserte Alkali-Cellulose wird einer Ruhezeit unterworfen, die ihre Reifung bewirkt, anschließend erfolgt die Sulfidierung der Alkali-Cellulose mit Schwefelkohlenstoff unter den Bedingungen gemäß der ersten Verfahrensvariante.

Die zweite Verfahrensvariante läßt sich insbesondere dann anwenden, wenn man bei der Viskose-Herstellung von Zellstoffmaische ausgeht. In diesem Fall ergibt sich beispielsweise folgende kontinuierliche Verfahrensweise:

Die erste Alkalisierung der Cellulose erfolgt mit Lauge üblicher Konzentration bei einer Stoffdichte, die so eingestellt ist, daß sich nach dem Verdünnen der Lauge auf die gewünschte Konzentration für die zweite Alkalisierung eine Stoffdichte von 5 Gewichts-% ergibt. Betragen beispielsweise diese Laugekonzentrationen 19 Gewichts-% (erste Alkalisierung) bzw. 13 Ge-

wichts-% (zweite Alkalisierung), so muß die Stoffdichte bei der ersten Alkalisierung auf 7,5 Gewichts-% eingestellt werden. Die Verdünnung der Maische mit kaltem Wasser erfolgt auf dem Wege zwischen Anmaischer und Zwischenbehälter, der als Puffer dient, zweckmäßig in einem geeigneten, bekannten Homogenisator durch kontinuierliches Zudosieren der vorberechneten Wassermenge. Die zweite Alkalisierung verläuft im Zwischenbehälter unter mäßiger Bewegung und einer gesamten Alkalisierungsdauer im Bereich von 20 bis 40, vorteilhaft 30 Min. bei einer Temperatur von höchstens 18°C, vorteilhaft bei einer Temperatur im Bereich von 5 bis 10°C.

Auch in diesem Fall ist es besonders zweckmäßig, daß bereits in der ersten Alkalisierungsstufe Lauge verwendet wird, deren Temperatur nicht höher als 18°C ist.

Bei dem erfindungsgemäßen Verfahren können sämtliche Zellstoffarten sowie Linters verwendet werden. Die NaOH-Konzentration der in der zweiten Alkalisierungsstufe verwendeten Natronlauge hängt von der Art des verwendeten Zellstoffes ab und muß entsprechend gewählt werden. Bei Verwendung von Holzzellstoff wird zweckmäßig eine Natronlauge einer Konzentration von 11 bis 13 Gewichts-% NaOH, bezogen auf das Gesamtgewicht der Lauge, verwendet, während beim Einsatz von Linters die zur Verwendung gelangende Natronlauge eine Konzentration im Bereich von 13 bis 15 Gewichts-% NaOH, bezogen auf ihr Gesamtgewicht, aufweist.

Das erfindungsgemäße Verfahren ermöglicht die Reduzierung der zur Sulfidierung der Alkali-Cellulose notwendigen Schwefelkohlenstoffmenge, was zur Folge hat, daß beispielsweise die beim Spinnen von Fasern oder Folien aus Viskoselösung freiwerdende Schwefelkohlenstoffmenge in der Abluft um ca. 19% und die Schwefelwasserstoffmenge um ca. 50% vermindert ist. Diese Abgasverminderung ist aus der Sicht des Umweltschutzes von ganz besonderer Bedeutung.

Ein weiterer Vorteil der geringen Gasentwicklung beim Spinnen der nach dem erfindungsgemäßen Verfahren hergestellten Viskoselösung besteht in der Verlängerung der sogenannten Schneidezeit bei der Herstellung von Schläuchen durch Spinnen von Viskose in entsprechende Fällbäder. Zwecks Entfernung von Gas und verbrauchter Säure aus dem Schlauchinnern muß der Schlauch in bestimmten Zeitabständen aufgeschlitzt werden. Infolge der geringeren Menge freiwerdender Gase bei der Spinnverarbeitung von nach dem erfindungsgemäßen Verfahren hergestellter Viskose ist es möglich, die zeitliche Aufeinanderfolge von notwendig werdenden Einschnitten in den Schlauch um den Faktor 2 bis 3 zu verlängern, was sich vorteilhaft auf die Abfallquote des hergestellten Produktes und dessen weitere Verarbeitung auswirkt.

Das erfindungsgemäße Verfahren wird durch die nachfolgenden Beispiele erläutert:

stellte Alkali-Cellulose wird dann einer zweiten Alkalisierung unterworfen, indem man während eines Zeitraumes von 30 Min. Natronlauge einer Konzentration von 14,3 Gewichts-% NaOH, bezogen auf das Gesamtgewicht der Lauge, auf sie zur Einwirkung bringt.

Die zur Einwirkung gelangende Natronlauge hat eine Anfangstemperatur von 15°C. Im Verlauf der Einwirkungsdauer steigt die Temperatur der Natronlauge im Gemisch bis auf 18°C an.

Das Reaktionsgut weist einen Celluloseanteil von 5%, bezogen auf das Gesamtgewicht, auf.

Die Weiterbehandlung der Alkali-Cellulose, die nach dem Abpressen 35,4 Gewichts-% Cellulose und 13,8 Gewichts-% NaOH enthält, erfolgt gemäß Beispiel 1:

Die Sulfidierung der Alkali-Cellulose erfolgt durch Einwirkung einer Schwefelkohlenstoffmenge von 25 Gewichts-%, bezogen auf den Cellulosegehalt der Alkali-Cellulose.

Die Viskoselösung enthält 7,1 Gewichts-% Cellulose sowie 5,7 Gewichts-% Alkali, jeweils bezogen auf das Gesamtgewicht der Lösung. Ihr Filterwert beträgt 71%.

Beim Verspinnen dieser Viskose enthält das Abgas aus der sauren Spinnkufe nur 47 ppm Schwefelwasserstoff und 77 ppm Schwefelkohlenstoff gegenüber 96 ppm Schwefelwasserstoff und 107 ppm Schwefelkohlenstoff beim Verspinnen von Viskose, die durch Sulfidierung von Alkali-Cellulose mit 34 Gewichts-% Schwefelkohlenstoff hergestellt worden ist.

Die Schneidezeit der aus erfindungsgemäß hergestellter Viskose hergestellten Schläuche kann von 30 Min. auf 75 Min. verlängert werden.

### Beispiel 4

Baumwoll-Linters in Plattenform werden in einem Reaktionsgefäß während einer Zeitdauer von 30 Min. mit Natronlauge einer Temperatur von 18°C, die eine Konzentration von 20,0 Gewichts-% NaOH, bezogen auf das Gesamtgewicht Lauge, aufweist, alkalisiert. Die Mischung weist einen Cellulosegehalt von 5 Gewichts-%, bezogen auf das Gesamtgewicht, auf. Die alkalisierte Cellulose wird abpressungsfrei von einem Gewichtsdrittel der Lauge befreit, indem man diese Menge aus dem Reaktionsbehälter ablaufen läßt.

Das dem Reaktionsbehälter entnommene Gewichtsdrittel Lauge wird ersetzt durch Zugabe einer entsprechenden Menge Wasser einer Temperatur von ca. 10°C. Nach der Wasserzugabe weist die Lauge eine Temperatur von 18°C auf. Die entsprechende Wassermenge wird zweckmäßig in den Laugekreislauf eingespeist.

Die Alkalikonzentration der im Verlauf der zweiten Alkalisierungsstufe auf die Alkali-Cellulose einwirkenden Lauge beträgt 13,6 Gewichts-% NaOH, bezogen auf das Gesamtgewicht der Lauge, das Reaktionsgut weist dann einen Celluloseanteil von 5 Gewichts-%, bezogen auf das Gesamtgewicht, auf. Während der Gesamtdauer der Einwirkungszeit der Lauge während der zweiten Alkalisierungsstufe wird dann durch Kühlen des Reaktionsbehälters verhindert, daß die Laugetemperatur 18°C übersteigt. Die Alkali-Cellulose wird, wie in Beispiel 1 angegeben, abgepreßt, zerfasert und der dort angegebenen Reifezeit unterworfen. Die Alkali-Cellulose enthält 36,1 Gewichts-% Cellulose sowie 14,2 Gewichts-% Alkali, jeweils bezogen auf das Gesamtgewicht der Alkali-Cellulose.

Die Sulfidierung der Alkali-Cellulose durch Einwirkung von Schwefelkohlenstoff erfolgt unter Einsatz von 25 Gewichts-% Schwefelkohlenstoff, bezogen auf das Cellulosegewicht der Alkali-Cellulose.

Die wie in Beispiel 1 angegeben hergestellte Viskoselösung enthält 7,14 Gewichts-% Cellulose sowie 5,76 Gewichts-% Alkali, bezogen auf ihr Gesamtgewicht; ihr Filterwert beträgt 73%.

### Beispiel 5

Wie Beispiel 4, jedoch mit dem Unterschied, daß die zugegebene Wassermenge eine Temperatur von 0°C aufweist, und die Anfangstemperatur der Lauge in der zweiten Alkalisierungsstufe entspricht 10%.

Die hergestellte Viskose ist durch einen Gehalt von 7,2 Gewichts-% Cellulose und 5,9 Gewichts-% Alkali, jeweils bezogen auf das Gesamtgewicht der Viskose, sowie einen Filterwert von 77% charakterisiert.

### Beispiel 6

Buchenholzzellstoff wird mit Lauge einer Konzentration von 20 Gewichts-%, die eine Temperatur von ca. 25°C aufweist, zu einer Mischung einer Stoffdichte von 7,5 Gewichts-% Zellstoff, bezogen auf das Gesamtgewicht, in einem Behälter angemaischt.

Nach einer Laugeeinwirkungszeit von 30 Min. wird der Mischung Wasser einer Temperatur von ca. 0°C (Eiswasser) in einer solchen Menge zugegeben, daß die Mischung nach der Zugabe eine Stoffdichte von 5 Gewichts-% Cellulose, bezogen auf das Gesamtgewicht der Mischung, aufweist. Die Maischdauer beträgt 30 Min. Durch Kühlung des Behälters wird die Maischtemperatur derart eingestellt, daß die Maische eine Temperatur von 18°C nicht überschreitet.

Die Alkali-Cellulose wird dann von überschüssiger Alkalilauge abgepreßt und zerfasert, sie weist einen Cellulosegehalt von 32,8 Gewichts-% und einen Alkaligehalt von 12,5 Gewichts-% auf. Die Alkali-Cellulose wird dann durch Einwirkung von 22 Gewichts-% Schwefelkohlenstoff, bezogen auf Cellulose in der Alkali-Cellulose, sulfidiert und das Reaktionsprodukt dann in Natronlauge einer Konzentration von ca. 3% gelöst.

Die Lösung unterwirft man einer Reifezeit von 48 Std., im Verlauf derer die Lösung in bekannter Weise filtriert und entgast wird. Die Viskoselösung hat einen Gehalt von 9,5 Gewichts-% Cellulose und 5,5 Gewichts-% Alkali, jeweils bezogen auf ihr Gesamtgewicht, sowie einen Filterwert von 76%.

Die Durchführung all dieser Versuche bei Temperaturen von über 18°C bei der zweiten Alkalisierung brachte Filterwerte, die um so weiter unterhalb von $k_f = 70\%$ lagen, je höher die Alkalisierungstemperatur war.

**Patentansprüche**

1. Verfahren zur Herstellung von Viskose, umfassend die Schritte:

a) Behandeln von Cellulose mit überschüssiger Alkalilauge einer üblichen Konzentration und üblicher Temperatur in einem ersten Alkalisierungsschritt unter Bildung von Alkali-Cellulose, danach entweder

b1) Befreien der Alkali-Cellulose, hergestellt nach Schritt a), von wenigstens einem Teil der überschüssigen Alkalilauge, ohne die Alkali-Cellulose abzupressen, umfassend das Ablaufenlassen wenigstens eines Teils der überschüssigen Alkalilauge aus dem Reaktionsgefäß, in welchem Schritt a) durchgeführt wird, und anschließendes Behandeln der Alkali-Cellulose in einem zweiten Alkalisierungsschritt mit einer zweiten Alkalilauge, die eine niedrigere Alkalikonzentration aufweist als die im Schritt a) verwendete Alkalilauge, bei einer Temperatur von höchstens 18°C, oder, anstelle von b1),

b2) Behandeln der Alkali-Cellulose, hergestellt nach Schritt a), mit einer Alkalilauge, die erhalten wird durch Verdünnen der Alkalilauge, welche bereits in Schritt a) eingesetzt wurde, in einem zweiten Alkalisierungsschritt bei einer Temperatur von höchstens. 18°C,

c) Abpressen der zweifach alkalisierten Cellulose aus Schritt b1) oder b2) zur Entfernung von überschüssiger Alkalilauge,

d) Zerkleinern der abgepreßten Alkali-Cellulose in üblicher Weise,

e) Reifen des zerkleinerten Materials in üblicher Weise über eine Zeitspanne, die ausreicht, um einen bestimmten Durchschnittspolymerisationsgrad des Produktes zu erhalten,

f) übliche Sulfidierung der gereiften Alkali-Cellulose,

g) Lösen des sulfidierten Produktes unter Bildung einer Viskoselösung auf übliche Weise.

2. Verfahren nach Anspruch 1, dadurch gekennzeichnet, daß der zweite Alkalisierungsschritt der Stufe b2) ausgeführt wird nach dem Ablaufenlassen eines Teils der überschüssigen Alkalilauge aus dem Reaktionsgefäß, in welchem der Schritt a) ausgeführt wird.

3. Verfahren nach Anspruch 1 oder 2, dadurch gekennzeichnet, daß die Alkalilauge der Stufe b2) bei dem zweiten Alkalisierungsschritt erhalten wird durch Verdünnen der Alkalilauge der Stufe a) mit Eiswasser zur Herstellung einer Lösung der gewünschten Konzentration.

4. Verfahren nach einem der Ansprüche 1 bis 3, dadurch gekennzeichnet, daß die Anfangstemperatur der Alkalilauge beim zweiten Alkalisierungsschritt nicht größer als 15° C ist.

5. Verfahren nach Anspruch 4, dadurch gekennzeichnet, daß die Anfangstemperatur der Alkalilauge im Bereich von 5 bis 10° C liegt.

6. Verfahren nach einem der Ansprüche 1 bis 5, dadurch gekennzeichnet, daß die Reaktionsmischung während des zweiten Alkalisierungsschrittes gekühlt wird, um eine Temperatur nicht höher als 18° C zu halten.

7. Verfahren nach einem der Ansprüche 1 bis 6, dadurch gekennzeichnet, daß die Sulfidierung im Schritt f) mit Schwefelkohlenstoff durchgeführt wird.

8. Verfahren nach Anspruch 7, dadurch gekennzeichnet, daß die Alkali-Cellulose mit 22 bis 28 Gew.-% Schwefelkohlenstoff, bezogen auf das Cellulosegewicht, behandelt wird.

**Claims**

1. Process for manufacturing viscose comprising the following steps:

(a) treating cellulose with an excess of alkali metal hydroxide solution having a usual concentration and a usual temperature in a first alkalization treatment, such that alkalized cellulose is produced; then either

(b1) freeing the alkalized cellulose produced in step (a) from at least part of the excess hydroxide solution without pressing the alkalized cellulose, comprising the step of draining at least part of the excess alkali metal hydroxide solution from the reaction vessel in which step (a) is effected, and then treating the alkalized cellulose with a second alkali metal hydroxide solution having a lower alkali metal hydroxide concentration than the alkali metal hydroxide solution used in step (a) in a second alkalization treatment, at a temperature of not more than 18° C; or instead of (b1),

(b2) treating the alkalized cellulose produced in step (a) with an alkali metal hydroxide solution obtained by diluting the alkali metal hydroxide solution which has already been used in step (a) in a second alkalization treatment, at a temperature of not more than 18° C;

(c) pressing the twice-alkalized cellulose from step (b1) or (b2) to remove excess alkali metal hydroxide solution;

(d) shredding the pressed alkali cellulose in the usual manner;

(e) aging the disintegrated material in the usual manner for a period of time which suffices to produce a product having a particular average degree of polymerization;

(f) sulfiding the aged alkali cellulose in the usual manner; and

(g) dissolving the sulfided product to produce a viscose solution in the usual manner.

2. A process according to claim 1, wherein the second alkalization treatment of step (b2) is carried out after draining part of the excess alkali metal hydroxide solution from the reaction vessel in which step (a) is effected.

3. A process according to claim 1 or claim 2, wherein the alkali metal hydroxide solution in step (b2) in the second alkalization treatment is obtained by diluting the alkali metal hydroxide solution used in step (a) with ice water to produce a solution having the desired concentration.

4. A process according to any of claims 1 to 3, wherein the initial temperature of the alkali metal hydroxide solution used in the second alkalization treatment is not more than 15° C.

5. A process according to claim 4, wherein the initial temperature of the alkali metal hydroxide solution lies in the range from 5° to 10° C.

6. A process according to any of claims 1 to 5, wherein the reaction mixture is cooled during the second alkalization treatment to maintain the temperature at not more than 18° C.

7. A process according to any of claims 1 to 6, wherein the sulfiding in step (f) is effected with carbon disulfide.

8. A process according to claim 7, wherein the alkali cellulose is treated with from 22 to 28 percent by weight of carbon disulfide, based on the weight of the cellulose.

## Revendications

1. Procédé pour la fabrication de viscose comprenant les stades suivants:

a) Traitement de la cellulose par un excès de solution alcaline d'une concentration habituelle, à une temperature habituelle, au cours d'un premier stade d'alcalinisation sous formation d'alcali-cellulose, puis soit:

b1) Essorage de l'alcali-cellulose fabriquée suivant le stade a) pour éliminer au moins une partie de la solution alcaline en excès sans presser l'alcali-cellulose comprenant l'écoulement d'au moins une partie de la solution alcaline en excès du réacteur dans lequel le stade a) est effectué, puis traitement de l'alcali-cellulose au cours d'un second stade d'alcalinisation par une seconde solution alcaline ayant une concentration en alcali moins élivée que la solution alcaline employée dans le stade a), à une température de 18° C maximum, soit, au lieu de b1),

b2) Traitement de l'alcali-cellulose obtenue suivant le stade a) par une solution alcaline préparée par dilution de la solution alcaline déjà employée au cours du stade a) dans un second stade d'alcalinisation à une température de 18° C au plus;

c) Essorage sous pression de la cellulose deux fois alcalinisée provenant du stade b1) ou b2) pour éliminer la solution alcaline en excès;

d) Boryage de l'alcali-cellulose essorée de façon habituelle;

e) Maturation du matériau broyé de façon habituelle pendant une période suffisamment longue pour obtenir un degré de polymérisation moyen déterminé du produit;

f) Sulfuration de facon habituelle de l'alcali-cellulose après maturation;

g) Dissolution du produit sulfuré sous formation d'une solution de viscose de façon habituelle.

2. Procédé selon la revendication 1 caractérisé en ce que le second stade d'alcalinisation du stade b2) est réalisé après l'écoulement d'une partie de la solution alcaline du réacteur dans lequel est effectué le stade a).

3. Procédé selon la revendication 1 ou 2 caractérisé en ce que la solution alcaline du stade b2) pour le second stade d'alcalinisation est obtenue par dilution de la solution alcaline du stade a) avec de l'eau glacée pour préparer une solution de concentration souhaitée.

4. Procédé selon l'une des revendications 1 à 3 caractérisé en ce que la température initiale de la solution alcaline au cours du second stade d'alcalinisation n'est pas supérieure à 15° C.

5. Procédé selon la revendication 4 caractérisé en ce que la température initiale de la solution alcaline est comprise entre 5 et 10° C.

6. Procédé selon l'une des revendications 1 à 5 caractérisé en ce que le mélange réactionnel est refroidi pendant le second stade d'alcalinisation afin d'obtenir une température qui n'est pas supérieure à 18° C.

7. Procédé selon l'une des revendications 1 à 6 caractérisé en ce que la sulfuration du stade f) est effectuée avec du sulfure de carbone.

8. Procédé selon la revendication 7 caractérisé en ce que l'alcali-cellulose est traitée avec 22 à 28% en poids de sulfure de carbone par rapport au poids de la cellulose.